# EUROPEAN PATENT APPLICATION

(11) **EP 1 748 438 A1**
(43) Date of publication of application: **31.01.2007**
(21) Application number: 06117602.0
(22) Date of filing: 20.07.2006
(51) Int. Cl.: G11B 27/00, G11B 27/28, G11B 27/034

(54) **Video apparatus and control method**

(30) Priority: 27.07.2005 KR 20050068577
(71) Applicant: Samsung Electronics Co., Ltd., Suwon-si, Gyeonggi-Do (KR)
(72) Inventor: Kim, Sang-hee, Hogye-dong, Dongan-gu, Anyang-si (KR)
(74) Representative: Clark, Charles Robert

(57) **Abstract**

A video playback apparatus includes a scene change detector which analyzes a video signal and detects a scene change frame, and a controller which controls a trick play speed of the video signal such that a reproduction time of the scene change frame is extended longer than that of another video frame if a trick play function is selected. Thus, a video playback apparatus, a control method thereof and a personal video recorder are provided, which are capable of easily searching the location of a picture desired by a user in execution of a trick play function.

## Description

The present invention relates to a video playback apparatus, a control method therefor and a personal video recorder (PVR), and more particularly, to a video playback apparatus, a control method thereof and a PVR, having a trick play function.

Generally, in a video apparatus for reproducing a video signal stored in a storage medium, a user can search and watch desired pictures through a function of a key for fast forwarding, rewinding or the like. Such a function is referred to as a trick play function by persons skilled in the art. Other so-called "trick play" functions include scene freeze or still mode, shuttle mode, or variable-speed playback mode. Of course, this list is not exclusive of functions which might be categorised as trick play, but the list merely helps to illustrate the well known function.

The video playback apparatuses for executing such a trick play function are products such as VCRs, DVDs and PVRs. Embodiments of the present invention are described below with reference to PVRs, but the invention is not limited to such devices.

A PVR receives broadcasting signals and stores the signals in a file format in a high-capacity memory such as a hard disk, and then a user can reproduce and watch preferable programs when the user wishes. Typically, a PVR can be connected to a set-top box or a TV, which facilitate digital signal processing.

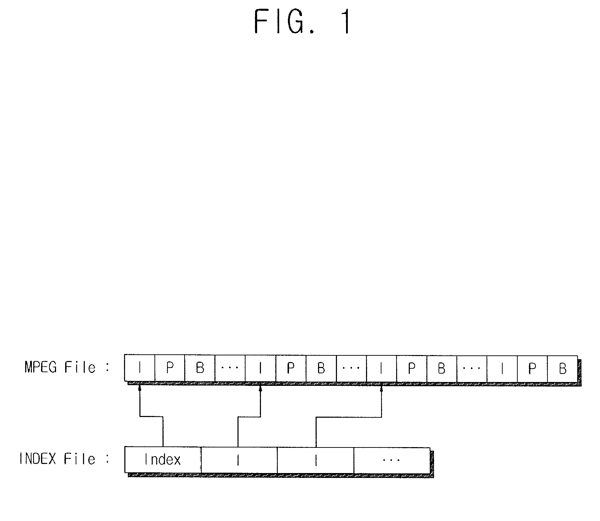

A method of executing a trick play function in a conventional PVR will now be described with reference to FIGURE 1.

As shown in FIGURE 1, a PVR receives broadcasting signals in a transport packet format and then stores them in a file format. At this time, the PVR extracts I-pictures for a trick play function to generate index information on locations of the I-pictures, and then stores them as a file separated from video signals. Also, when executing the trick play function, the PVR reads and reproduces an I-picture based on the stored index information on locations of the I-pictures, so that a function of a fast forwarding or rewinding is executed.

Here, the execution of a trick play function makes it possible to search or playback images at various speeds of 2 times, 4 times, 5 times, 8 times, 10 times, 20 times, 30 times, 50 times, 100 times, 300 times, 500 times normal playback speed, or the like. However, there is a problem that, in the case of playback speeds of over 10 times, it becomes more difficult to distinguish the contents of pictures with the human eye, thus it is difficult to manually search for desired pictures or scenes at these relatively fast playback speeds. In this case, it is possible only to move to an approximate location in the whole length of pictures or scenes, rather than to search the location of a picture or scene desired by a user through a trick play function.

Accordingly, the present invention aims to provide a video playback apparatus, a control method thereof and a personal video recorder, which are capable of easily searching the location of a picture desired by a user in execution of a trick play function.

The foregoing and/or other aspects of the present invention can be achieved by providing a video playback apparatus, comprising: a detector which analyzes a video signal and detects a scene change frame; and a controller which controls a trick play speed of the video signal such that a reproduction time of the scene change frame is extended longer than a reproduction time of another video frame if a trick play function is selected.

According to an aspect of the present invention, the controller is configured to reproduce the scene change frame as a still picture for a predetermined time.

According to an aspect of the present invention, the video playback apparatus further comprises: a scene change index generator which generates location information on the scene change frame and stores the location information on the scene change frame in a memory, wherein the controller controls the trick play speed based on the location information on the scene change frame.

According to an aspect of the present invention, the location information on the scene change frame comprises at least one of address information and time information of the scene change frame.

According to an aspect of the present invention, the controller can identify an interval between scene change frames and changes the trick play speed of the video signal according to the identified interval.

According to an aspect of the present invention, the trick play speed of a video frame between scene change frames with a long interval is faster than the trick play speed of a video frame with a short interval.

According to an aspect of the present invention, the video playback apparatus further comprises: an I-picture detector which detects an I-picture from the video signal; and an I-picture index generator which generates location information on the I-picture and stores the location information on the I-picture in the memory, wherein the controller trick-reproduces the I-picture based on the location information on the I-picture if the trick play function is selected.

According to an aspect of the present invention, the video playback apparatus further comprises an I-picture converter, which converts the scene change frame into the I-picture if the scene change frame is not the I-picture.

The foregoing and/or other aspects of the present invention can be achieved by providing a method of performing a trick play function in a video playback apparatus, comprising: detecting a scene change frame by analyzing a video signal; and controlling a trick play speed of the video signal such that a reproduction time of the scene change frame is extended longer than a reproduction time of another video frame if a trick play function is selected.

According to an aspect of the present invention, controlling of the trick play speed comprises reproducing the scene change frame as a still picture for a predetermined time.

According to an aspect of the present invention, the controlling of the trick play speed further comprises: identifying an interval between scene change frames; and changing the trick play speed according to the identified interval.

According to an aspect of the present invention, the trick play speed of a video frame between scene change frames with a long interval is faster than the trick play speed of a video frame with a short interval.

According to an aspect of the present invention, the method further comprises generating and storing location information on the scene change frame, wherein the controlling of the trick play speed is based on the location information of the scene change frame.

According to an aspect of the present invention, the location information on the scene change frame comprises at least one of address information and time information of the scene change frame.

According to an aspect of the present invention, the method further comprises: detecting an I-picture from the video signal; generating location information on the I-picture; and storing the I-picture and the location information on the I-picture; wherein the controlling of the trick play speed comprises trick-reproducing the I-picture based on the location information on the I-picture if the trick play function is selected.

According to an aspect of the present invention, the method further comprises converting the scene change frame into the I-picture if the scene change frame is not the I-picture.

The foregoing and/or other aspects of the present invention can be achieved by providing a method of performing a trick play function in a video playback apparatus comprising a broadcasting receiver for receiving a broadcasting signal; a demodulator for demodulating the received broadcasting signal; an I-picture detector for detecting an I-picture in the demodulated signal; an index generator for generating location information on the I-picture; and a memory having the location information on the demodulated signal and the I-picture stored therein, the method comprising: detecting a scene change frame by decoding a video signal in the demodulated broadcasting signal and generating index information on the scene change frame; storing the index information on the scene change frame in the memory; and controlling a trick play speed of the I-picture such that a reproduction time of the scene change frame is extended longer than a reproduction time of another video frame if the I-picture is trick-reproduced.

According to an aspect of the present invention, the method further comprises converting the scene change frame into the I-picture if the scene change frame is not the I-picture.

According to an aspect of the present invention, the controlling of the trick play speed further comprises: identifying an interval between scene change frames; and changing the trick play speed according to the identified interval.

According to an aspect of the present invention, the trick play speed of a video frame between scene change frames with a long interval is faster than the trick play speed of a video frame with a short interval.

The foregoing and/or other aspects of the present invention can be achieved by providing a personal video recorder (PVR) for storing and reproducing a received broadcasting signal, the PVR comprising: a scene change frame detector which detects a scene change frame in a demodulated video signal; a scene change index generator which generates location information on the scene change frame; an I-picture detector which detects an I-picture in the demodulated video signal; an I-picture index generator which generates the location information on the I-picture; a memory which stores the demodulated video signal and the location information on the scene change frame, and the location information on the I-picture; and a controller which controls a trick play speed of the video signal such that a reproduction time of the scene change frame is extended longer than a reproduction time of another video frame if a trick play function is selected.

According to an aspect of the present invention, the PVR further comprises an I-picture converter, which converts the scene change frame into the I-picture when the scene change frame is not the I-picture.

According to an aspect of the present invention, the controller identifies an interval between scene change frames and changes the trick play speed according to the identified interval.

According to an aspect of the present invention, the trick play speed of a video frame between scene change frames with a long interval is faster than the trick play speed of a video frame with a short interval.

Embodiments of the prevent invention are now described by way of example, with reference to the accompany drawings, of which:
FIGURE 1 is a schematic view illustrating a video signal and index information, stored in a hard disk in accordance with a conventional PVR function;
FIGURE 2 is a control block diagram of a digital TV according to embodiments of the present invention;
FIGURE 3 is a control flowchart illustrating a video data storage method for a PVR function according to embodiments of the present invention;
FIGURE 4 is a control flowchart illustrating an execution method of a trick play function according to embodiments of the present invention; and
FIGURE 5 is a control flowchart illustrating an execution method a trick play function according to another embodiment of the present invention.

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

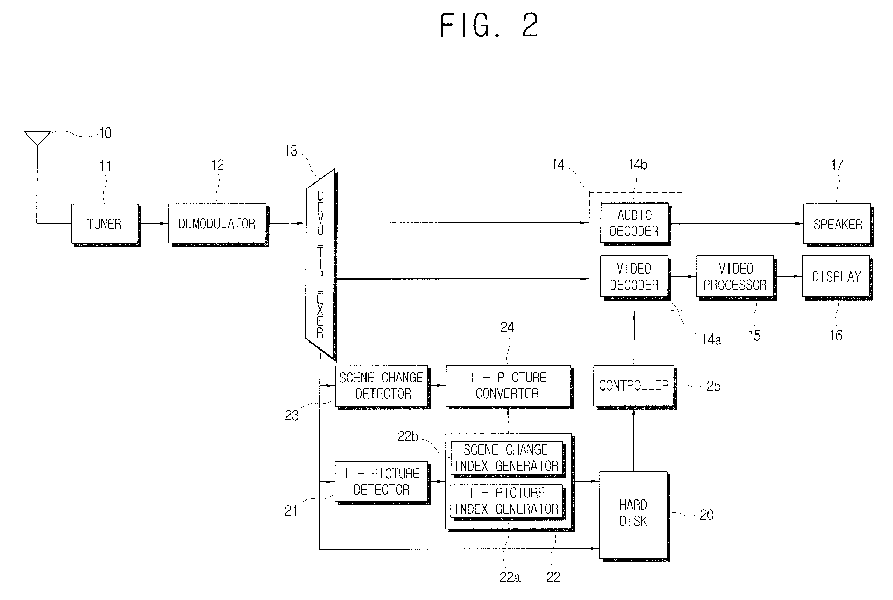

FIGURE 2 is a control block diagram of a digital TV according to a first exemplary embodiment of the present invention.

As shown in FIGURE 2, the digital TV according to an embodiment of the present invention includes an antenna 10, a tuner 11, a demodulator 12, a demultiplexer 13, a decoder 14, a video processor 15, a display 16 and a speaker 17.

The tuner 11 tunes a broadcasting signal received through the antenna 10 in accordance with a tuning control signal as a broadcasting signal having a frequency band corresponding thereto. Here, digital broadcasting signals are transmitted in a format of a transport stream having video and audio signals, and having various kinds of time-divisionally multiplexed and packeted data.

The broadcasting signal of a specific channel, tuned by the tuner 11, is passed through a demodulation process and an error correction process by the demodulator 12, and then outputted in a format of a transport stream. Further, it is divided into video stream, audio stream, and data stream by the demultiplexer 13 and then outputted in a bitstream format.

The video stream separated through the demultiplexer 13 is decoded by an MPEG video decoder 14a. The decoded video signal is then processed by the video processor 15 and displayed on the display 16. The display 16 may employ various sorts of display modules such as DLP (Digital Light Processing), LCD (Liquid Crystal Display) and PDP (Plasma Display Panel), or the like. Also, the video processor 15 includes a scaler for converting video streams to be suitable for an output standard of the display 16, such as vertical frequencies, resolution and screen ratios.

Further, the audio stream is decoded by an audio decoder 14b and then outputted to the speaker 17.

The digital TV also includes a hard disk 20, an I-picture detector 21, an index generator 22, a scene change detector 23 and a controller 25 to perform a PVR function.

When a PVR function is performed, the video stream separated from the demultiplexer 13 is stored in the hard disk 20, and the video stream stored by the hard disk 20 is read and then processed through the decoder 14 and the video processor 15 to be reproduced when a user desires.

At this time, a video stream stored by the hard disk 20 is of an MPEG format, which is stored as it is received (in the case of a digital broadcasting signal). However, in the case of an analogue signal, a process of encoding the received signal into an MPEG format is needed.

The video stream separated through the demultiplexer 13 is composed of a group of picture (GOP) units, i.e., I-picture, P-picture and B-picture, and the I-picture detector 21 detects an I-picture in the video stream. By detecting information contained in the header of a video stream, it can be determined whether or not it is an I-picture.

An I-picture index generator 22a generates index information on the location of the detected I-picture and then stores it in an index file format in the hard disk 20. The index information on the location of the detected I-picture contains the address of the I-picture. Further, the index information further contains information on the time of a correspondent I-picture, which serves as a reference when a trick play function is executed.

The scene change detector 23 decodes the video stream separated from the demultiplexer 13 and then detects a frame in which a scene is changed, comparing the decoded video stream by frame unit. The scene change detector 23 may be implemented with an algorithm for detecting scene changes, which detects scene change frames based on information on differences between the decoded frames in consideration of a statistic characteristic of video signals. The algorithm for detecting scene changes can be variously programmed depending on products.

The scene change frame may be detected from I-pictures.

Further, index information on the location of the detected scene change frame is generated by a scene change index generator 22b and then stored in a fixed region of the hard disk 20 in a file format. Index information on locations can contain the address of a scene change frame. The index information serves as a reference when a trick play function is executed.

A digital TV according to an embodiment of the present invention may further include an I-picture converter 24, which converts a P-picture or a B-picture into an I-picture in the case that the P-picture or the B-picture is detected as a scene change frame; a scene change is not related to whether or not it is an I-picture. The scene change detector 23 decodes a P-picture or a B-picture, or both a P-picture and a B-picture, and then determines whether or not it is a scene change frame.

The controller 25 executes a trick play function. The trick play function may be implemented with a software program. The controller 25 controls a speed for a trick reproduction based on I-picture index information and scene change index information, stored in the hard disk 20 when a trick play function is executed.

Specifically, based on index information on an I-picture stored in the hard disk 20 when executing a trick play function, the controller 25 reads the I-picture and executes the trick play function. Based on index information on scene change frames, the controller 25 reproduces a scene change frame as a still picture for a predetermined time, and fast-forwards or rewinds other frames except the scene change frame at a predetermined speed. That is, a scene change frame is reproduced for a longer time than other frames, and a trick play function is executed for the other frames. Therefore, when a trick play function is executed, a user can identify a scene change frame with the naked eye, so that the user can easily search a desired picture or scene.

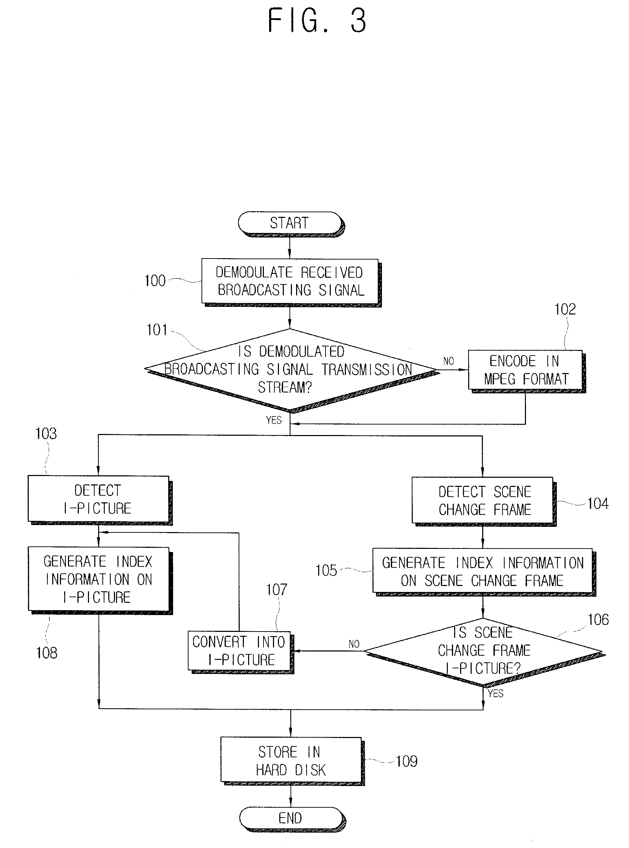

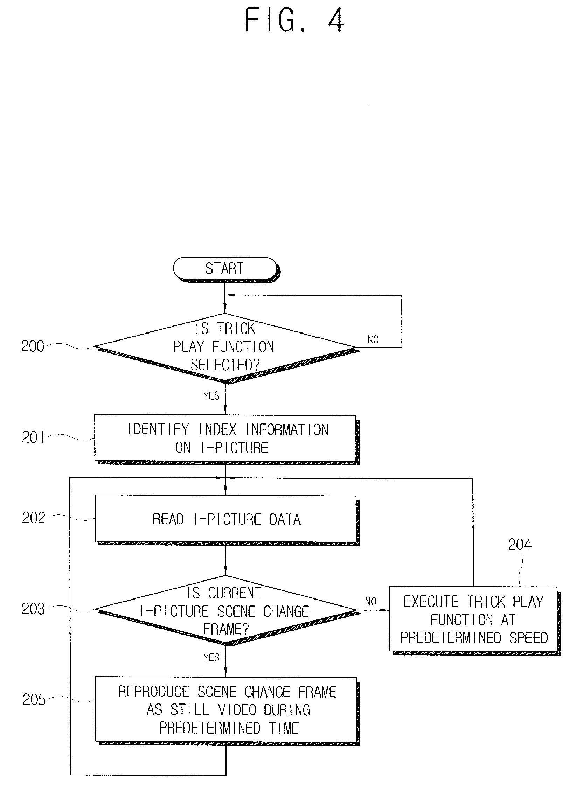

A control method of a digital TV according to the first exemplary embodiment will now be described with reference to FIGURES 3 and 4. Descriptions duplicated with the foregoing embodiments will not be given.

FIGURE 3 is a control flowchart illustrating a method of storing a received broadcasting signal in a hard disk of a digital TV.

First, a received broadcasting signal is demodulated by the demodulator 12 at operation 100. Next, it is determined whether or not the demodulated broadcasting signal is a transmission packet, i.e., a digital transmission stream at operation 101. If the demodulated broadcasting signal is an analogue signal, it is encoded into an MPEG format at operation 102.

The I-picture detector 21 detects an I-picture from the demodulated and encoded video stream of an MPEG format based on header information of a frame at operation 103. Further, the I-picture index generator 22a generates a location of the detected I-picture, i.e., address information and time information, and then stores it as an index file in the hard disk 20 at operation 108.

The scene change detector 23 decodes the demodulated and encoded video stream of an MPEG format, and detects a scene change frame based on characteristic difference information between the decoded frames at operation 104. Further, the scene change index generator 22b generates a location of the detected scene change frame, i.e., address information at operation 105.

The I-picture converter 24 determines whether or not the detected scene change frame is an I-picture at operation 106, and then converts the scene change frame into an I-picture based on an adjacent I-picture or an I-picture and a P-picture if the scene change frame is not an I-picture at operation 107.

Further, the I-picture index generator 22a generates index information on the location of the I-picture converted in this manner at operation 108.

The index information on the I-picture generated in this manner and the scene change frame is stored in the hard disk 20 at operation 109. Meanwhile, the index information generated in this manner becomes information forming a basis for executing the following trick play function.

FIGURE 4 is a control flowchart illustrating an execution method of a trick play function.

In the case that a trick play function for a video stream currently selected to be reproduced through a predetermined user selector (not shown) is selected at operation 200, the controller 25 identifies index information on an I-picture through an index file stored in the hard disk 20 at operation 201.

Further, the controller 25 reads I-picture data from the hard disk 20 based on the index information at operation 202, and then determines whether or not the currently read I-picture is a scene change frame at operation 203. If the current I-picture is not a scene change frame, a trick play function, such as fast forwarding or rewinding, is executed at a predetermined speed at operation 204. Conversely, if the current I-picture is a scene change frame, the scene change frame is reproduced as a still video during or for a predetermined time at operation 205. Therefore, a user can easily identify the content of a picture.

If a user selects a stop button or a play button through the user selector (not shown), the selected picture or scene is stopped or reproduced normally (that is, at a normal playback speed).

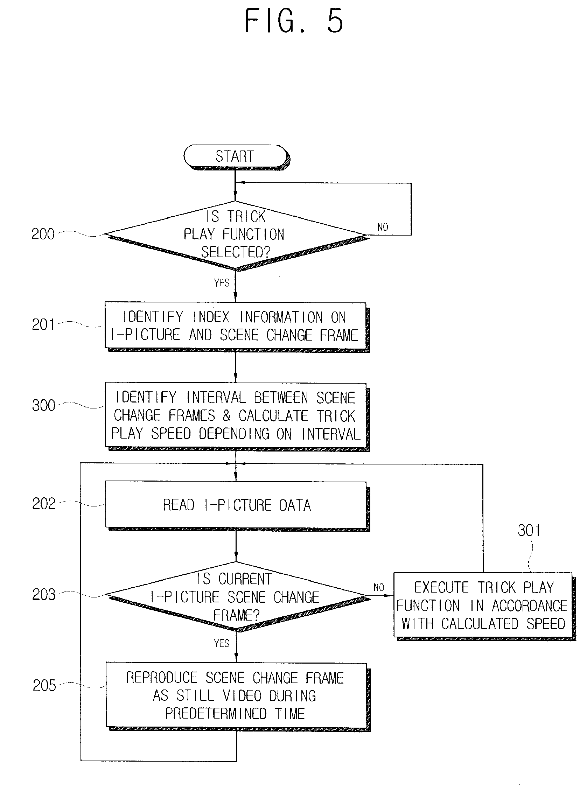

A digital TV according to annother embodiment of the present invention will now be described with reference to FIGURES 2 and 5. Common features of this embodiment with the previously described embodiment and duplicated descriptions with the foregoing embodiment are not repeated; reference should be made to the foregoing description.

When executing a trick play function, the controller 25 can adjust a trick play speed depending on an interval between scene frames based on index information on a scene change frame stored in the hard disk 20.

Specifically, in the case that an interval between scene change frames is long, the controller 25 increases a trick play speed, and in the case that an interval between scene change frames is short, the controller 25 decreases a trick play speed. Such a function can be implemented by an operation algorithm for calculating a speed depending on an interval between scene change frames. The operation algorithm can be variously programmed in accordance with a characteristic of a product.

Illustrating with reference to FIGURE 5, if a trick play function is selected, the controller 25 identifies an interval between scene change frames based on index information on scene change frames stored in the hard disk 20, and calculates a trick play speed between the scene change frames based on the length of the interval at operation 300.

For example, if an interval between scene change frames is relatively long, a trick play speed can be calculated to be fast, and if an interval between scene change frames is relatively short, a trick play speed can be calculated to be slow.

Further, when a trick play function between correspondent scene change frames is executed, the trick play function is executed in accordance with the calculated speed at operation 301.

Accordingly, a trick play speed is not executed at a fixed speed but is controlled depending on an interval between scene change frames, so that a user can easily search for a desired picture or scene, and a trick play time can also be reduced effectively. Further, since a scene change frame is shown as a still video during a fixed time, a current picture can be recognized regardless of its speed, so that a user can easily search for a desired picture or scene.

Although a digital TV having a PVR function has been described as an example in the foregoing embodiment, it will be apparent that the present invention can be applied to not only other apparatus having a PVR function including set-top boxes but also other video playback apparatus having a trick play function.

As described above, according to the present invention, there is provided a video playback apparatus, a control method thereof and a personal video recorder, which are capable of easily searching the location of a picture desired by a user in execution of a trick play function.

Although a few exemplary embodiments of the present invention have been shown and described, it will be appreciated by those skilled in the art that changes may be made in these embodiments without departing from the principles of the invention, the scope of which is defined in the appended claims and their equivalents.

## Claims

1. A video playback apparatus, comprising:
a detector arranged to analyze a video signal and detect a scene-change frame; and
a controller arranged to control a trick play speed of the video signal such that a reproduction time of the scene-change frame is extended with respect to a reproduction time of another video frame when a trick play function is selected.

2. The video playback apparatus according to claim 1, wherein the controller is configured to reproduce the scene change frame as a still picture for a predetermined time.

3. The video playback apparatus according to claim 1, further comprising:
a scene change index generator arranged to generate location information on the scene change frame and to store the location information on the scene change frame in a memory,
wherein, during use, the controller controls the trick play speed based on the location information on the scene change frame.

4. The video playback apparatus according to claim 3, wherein the location information on the scene change frame comprises at least one of address information and time information of the scene change frame.

5. The video playback apparatus according to claim 1, wherein the controller identifies an interval between scene change frames and changes the trick play speed of the video signal according to the identified interval.

6. The video playback apparatus according to claim 5, wherein the trick play speed of a video frame between scene change frames with a long interval is faster than the trick play speed of a video frame with a short interval.

7. The video playback apparatus according to claim 4, further comprising:
an I-picture detector arranged to detect an I-picture from the video signal; and
an I-picture index generator arranged to generate location information on the I-picture and store the location information on the I-picture in the memory,
wherein, when the trick play function is selected, the controller is arranged to reproduce the I-picture based on the location information on the I-picture.

8. The video playback apparatus according to claim 7, further comprising an I-picture converter arranged to convert the scene change frame into the I-picture when the scene change frame is not the I-picture.

9. A method of performing a trick play function in a video playback apparatus, comprising:
detecting a scene change frame by analyzing a video signal; and
when a trick play function is selected, controlling a trick play speed of the video signal to extend a reproduction time of the scene change frame with respect to a reproduction time of another video frame.

10. A method of performing a trick play function in a video playback apparatus comprising a broadcasting receiver for receiving a broadcasting signal; a demodulator for demodulating the received broadcasting signal; an I-picture detector for detecting an I-picture in the demodulated signal; an index generator for generating location information on the I-picture; and a memory having the location information on the demodulated signal and the I-picture stored therein, the method comprising:
detecting a scene change frame by decoding a video signal in the demodulated broadcasting signal and generating index information on the scene change frame;
storing the index information on the scene change frame in the memory; and
controlling a trick play speed of the I-picture such that a reproduction time of the scene change frame is extended with respect to a reproduction time of another video frame when the I-picture is trick-reproduced.

11. The method according to claim 9, wherein controlling of the trick play speed comprises reproducing the scene change frame as a still picture for a predetermined time.

12. The method according to claim 9 or 10, wherein the controlling of the trick play speed further comprises:
determining an interval time between scene change frames; and
changing the trick play speed according to the interval time.

13. The method according to claim 10 or 12, wherein the trick play speed is faster for a video sequence having a long interval time between scene change frames , with respect to a trick play speed for a video sequence having a shorter interval time between scene change frames.

14. The method according to claim 9, further comprising,
generating and storing location information on the scene change frame, wherein the controlling of the trick play speed is based on the location information of the scene change frame.

15. The method according to claim 14, wherein the location information on the scene change frame comprises at least one of address information and time information of the scene change frame.

16. The method according to claim 14, further comprising:
detecting an I-picture from the video signal;
generating location information on the I-picture; and
storing the I-picture and the location information on the I-picture;
wherein the controlling of the trick play speed comprises trick-reproducing the I-picture based on the location information on the I-picture when the trick play function is selected.

17. The method according to claim 10 or 16, further comprising converting the scene change frame into the I-picture if the scene change frame is not the I-picture.

18. A personal video recorder (PVR) for storing and reproducing a received broadcasting signal, the PVR comprising:
a scene change frame detector arranged to detect a scene change frame in a demodulated video signal;
a scene change index generator arranged to generate location information on the scene change frame;
an I-picture detector arranged to detect an I-picture in the demodulated video signal;
an I-picture index generator arranged to generate the location information on the I-picture;
a memory arranged to store the demodulated video signal and the location information on the scene change frame, and the location information on the I-picture; and
a controller arranged to control a trick play speed of the video signal such that, during use and when a trick play function is selected, a reproduction time of the scene change frame is extended with respect to a reproduction time of another video frame.

19. The PVR according to claim 18, further comprising an I-picture converter arranged to convert the scene change frame into the I-picture when the scene change frame is not the I-picture.

20. The PVR according to claim 18, wherein, during use, the controller determines an interval time between scene change frames and changes the trick play speed according to the interval time.

21. The PVR according to claim 18, wherein the trick play speed is faster for a video sequence having a long interval between scene change frames, with respect to the trick play speed of a video frame having a shorter interval.
